Europäisches Patentamt

European Patent Office

Office européen des brevets

(19)

(11)  **EP 0 628 183 B1**

(12)  **EUROPÄISCHE PATENTSCHRIFT**

(45) Veröffentlichungstag und Bekanntmachung des Hinweises auf die Patenterteilung:
**15.07.1998  Patentblatt 1998/29**

(21) Anmeldenummer: 93903837.8

(22) Anmeldetag: **01.03.1993**

(51) Int Cl.⁶: **G06F 7/52**

(86) Internationale Anmeldenummer:
**PCT/DE93/00175**

(87) Internationale Veröffentlichungsnummer:
**WO 93/17383 (02.09.1993 Gazette 1993/21)**

(54) **SCHALTUNGSANORDNUNG ZUM DIGITALEN MULTIPLIZIEREN VON INTEGER-ZAHLEN**

CIRCUIT ARRANGEMENT FOR THE DIGITAL MULTIPLYING OF INTEGER NUMBERS

AGENCEMENT D'UN CIRCUIT POUR LA MULTIPLICATION NUMERIQUE DE NOMBRES ENTIERS

(84) Benannte Vertragsstaaten:
**AT BE CH DE DK ES FR GB GR IE IT LI LU MC NL PT SE**

(30) Priorität: **29.02.1992  DE 4206316**
**21.04.1992  DE 4213107**

(43) Veröffentlichungstag der Anmeldung:
**14.12.1994  Patentblatt 1994/50**

(73) Patentinhaber: **HÖFFLINGER, Bernd**
**D-70569 Stuttgart (DE)**

(72) Erfinder: **HÖFFLINGER, Bernd**
**D-70569 Stuttgart (DE)**

(74) Vertreter: **Münich, Wilhelm, Dr. et al**
**Kanzlei Münich, Steinmann, Schiller**
**Wilhelm-Mayr-Str. 11**
**80689 München (DE)**

(56) Entgegenhaltungen:
**DE-A- 4 033 507          US-A- 4 555 768**

• **Derwent's abstract, no 88-197 207/28, Woche 8828, Zusammenfassung von SU 1 361 545, (CYBERNETICS INST), 1987-12-23**

**Beschreibung**

**Technisches Gebiet**

Die Erfindung bezieht sich auf eine Schaltungsanordnung zum digitalen Multiplizieren von Integer-Zahlen, mit einer Codiereinheit, die insbesondere den Logarithmus der zu multiplizierenden Zahlen bilden kann, einer Addiereinheit, die die Ausgangswerte der Codiereinheit addiert, und einer Decodiereinheit, die den Ausgangswert der Addiereinheit delogarithmiert.

Mikroelektronisch integrierte Signalprozessoren haben größte wirtschaftliche Bedeutung für alle Produktgebiete. Die fortschreitende Miniaturisierung hat dazu geführt, daß die digitale Signalverarbeitung bereits beachtliche praktische Erfolge, z.B. in der Echzeitverarbeitung von Sprach- und Bildsignalen aufzuweisen hat.

Hierzu wird beispielsweise auf den Artikel "Multiplier Policies for digital Signal Processing" in IEEE ASSP Magazine, 1990, S.6..20 verwiesen.

Miniaturisierung und erreichbare Funktionalität je Mikrochip haben außerdem zu einer Vielzahl von Versuchen zur Realisierung sogenannter neuronaler Netzwerke und Computer geführt.

**Stand der Technik**

Trotz des gewaltigen, bei der Miniaturisierung erreichten Fortschritts setzt bislang die riesige Zahl von Faltungsoperationen (Multiplikationen, Divisionen, Additionen und Subtraktionen), wie sie z.B. für die Verarbeitung von HDTV-Signalen, für die Echtzeiterkennung bewegter Szenen und für die Realisierung neuronaler Netze oder dgl. erforderlich ist, sowohl für die Erhöhung der Rechengeschwindigkeit als auch für die weitere Reduzierung der "Chip-Fläche" Grenzen.

Analoge und digitale Multiplikationen haben entweder geringe Dynamik (Auflösung) bzw. sind ungenau (kleines Signal-Rauschverhältnis) oder müssen mit großen Wortlängen bzw. mit Gleitkomma-Darstellung erfolgen, die die notwendige massive parallele Verarbeitung praktisch unmöglich machen.

Wegen des Genauigkeits- und Dynamik-Problems in der digitalen Signalverarbeitung werden zur Verarbeitung der eingangs- und ausgangsseitigen Analogsignale, die z.B. von Bildsensoren, Displayaktoren oder dgl. geliefert werden, Analog-Digital- und Digital-Analog-Umsetzer aufwendiger Bauart mit großen Wortlängen gefordert, die ebenfalls die Machbarkeit solcher Signalverarbeitungssysteme stark einschränken.

Deshalb ist in der deutschen Patentanmeldung P 40 33 507.0, zu der die vorliegende Anmeldung eine Zusatzanmeldung ist, eine Schaltungsanordnung beschrieben, bei der von der grundlegenden Überlegung ausgegangen wird, daß in vielen Fällen mit elektronischer Signalverarbeitung versucht wird, hochentwickelte, natürliche Vorgänge wie z. B. Sehen- und Hören bestmöglich zu unterstützen und nachzuahmen.

Diese Vorgänge zeichnen sich dadurch aus, daß durch sogenannte Adaption für die mit dem Sehen und Hören verbundenen Signale, wie Helligkeit und Schallstärke, große Dynamikbereiche überstrichen werden. Man hat erkannt, daß man durch den Umgang mit dem Logarithmus dieser Signale (der sogenannten logarithmischen Kompression) elektronisch verarbeitbare Signalhübe erhält, die dennoch relativ große Dynamikbereiche beschreiben können. Dies wird z.B. in der Pulscodemodulation von Sprache und in Bildsensoren mit logarithmischem Ausgangssignal verwendet.

Es sind zwar bislang verschiedene kompandierende Codierungen bekannt geworden, z.B. die in der Sprachcodierung eingesetzten Codierungen nach dem μ- bzw. A-Gesetz. Diese Codierungen wurden jedoch für spezielle Anforderungen der Sprachübertragung eingeführt, und sind kaum allgemein anwendbar.

Die bekannten Schaltungsanordnung zum digitalen Multiplizieren von Integer-Zahlen, mit einer Codiereinheit, die den Logarithmus der zu multiplizierenden Zahlen bildet, einer Addiereinheit, die die Ausgangswerte der Codiereinheit addiert, und einer Decodiereinheit, die den Ausgangswert der Addiereinheit delogarithmiert, haben jedoch den Nachteil, daß sowohl das "Logarithmieren" als auch das "Delogarithmieren" zeitaufwendig ist und die entsprechenden Schaltungselemente eine vergleichsweise große Chip-Fläche benötigen.

Aus der US 4 55768 geht ein digitales Signalverarbeitungssystem hervor, das Zahlen unter Zuhilfenahme von Logarithmiertafeln multipliziert oder dividiert. Im Falle der Multiplikation werden die logarithmierten Zahlen addiert, bei der Subtraktion enstprechend subtrahiert. Keine Hinweise sind dieser Druckschrift hinsichtlich Codierung und Genauigkeitsüberprüfung zu entnehmen.

**Darstellung der Erfindung**

Der Erfindung liegt die Aufgabe zugrunde, eine Vorrichtung zum Multiplizieren von Integer-Zahlen anzugeben, mit der zwei Integer-Zahlen einfach und mit vergleichsweise geringem elektronischen Aufwand mit vorgebbarer Genauigkeit multipliziert werden können.

Eine erfindungsgemäße Lösung dieser Aufgabe ist im Anspruch 1 angegeben. Weiterbildungen der Erfindung sind Gegenstand der Unteransprüche.

Der Erfindung liegt der Grundgedanke zugrunde, Integer-Zahlen X,Y digital mittels eines rekursiven Multiplikationsverfahrens zu multiplizieren, wobei zunächst die höchstwertigen Bits verarbeitet werden.

Hierzu werden zunächst die Zahlen nach folgender Formel dargestellt:

$$X = 2^k * (1 + x_B) = 2^k + X_B$$

$$Y = 2^1 * (1 + y_B) = 2^1 + Y_B$$

Anschließend werden die Mantissen, i.f. auch als DIGILOG-Mantissen bezeichnet, nach folgender Formel multipliziert:

$$X * Y = 2^k * (1 + x_B) * 2^1 * (1 + y_B)$$

$$= 2^{k+1} * (1 + x_B + y_B + x_B y_B)$$

Der in dieser Gleichung vorkommende Produktterm $x_B y_B$ stellt ein Maß für den Fehler des DIGILOG-Produkts dar und kann wiederum mit dem beschriebenen DIGILOG-Verfahren ausgewertet werden. Die Gemeinsamkeit dieser Umformung mit dem DIGILOG-Verfahren kann plausibel dargestellt werden, wenn die Beträge der Mantissen sehr klein sind oder nahe bei 1 liegen:

$$x_B, y_B \approx 0:$$

$$X * Y = 2^{k+1} (1 + x_B + y_B)$$

$$x_B, y_B \approx 1:$$

$$X * Y = 2^{k+1+1} (1 + [x_B + y_B]/2)$$

Die Genauigkeit und Dynamik (Wertebereich) lassen sich durch die Wahl der Wortbreite bei Mantisse und Exponent unabhängig voneinander einstellen. Durch eine iterative Anwendung läßt sich die Genauigkeit stufenweise erhöhen, wenn weitere Zeitschritte im Sinne des Systemtakts zur Verfügung stehen. Die relative Abweichung vom mathematisch genauen Produkt beträgt damit maximal 12 % bezogen auf den verbleibenden Produktterm der Mantissen und verringert sich bei rekursiver Anwendung des DIGILOG-Verfahrens bis auf Null.

**Kurze Beschreibung der Zeichnung**

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen bezüglich der Offenbarung aller im Text nicht näher erläuterten erfindungsgemäßen Einzelheiten ausdrücklich verwiesen wird. Es zeigen:

Fig. 1 ein Blockschaltbild eines Ausführungsbeispiels eines erfindungsgemäßen Multiplizierers,

Fig. 2a und 2b Schaltmatrizen für die Logarithmus-Funktion,

Fig. 3a und 3b eine Schaltmatrix für die Operation $2^{j1} B = C$ sowie ein Doppel-Schaltmatrix mit den Ausgängen $2^{j1} B = C$, $2^{j2} B = D$,

Fig. 4 eine Schaltungsanordnung mit einfacher Switch-Matrix und Akkumulator,

Fig. 5 Schaltmatrix mit Doppel-Switch-Matrix, Addierer und Akkumulator,

Fig. 6                Detektor für das Segment $S_{j2}$, in dem die zweite EINS auftritt,

Fig. 7                Schaltungsanordnung mit zwei parallel geschalteten Einfach-Switch-Matrizen, Addierer und Akkumulator.

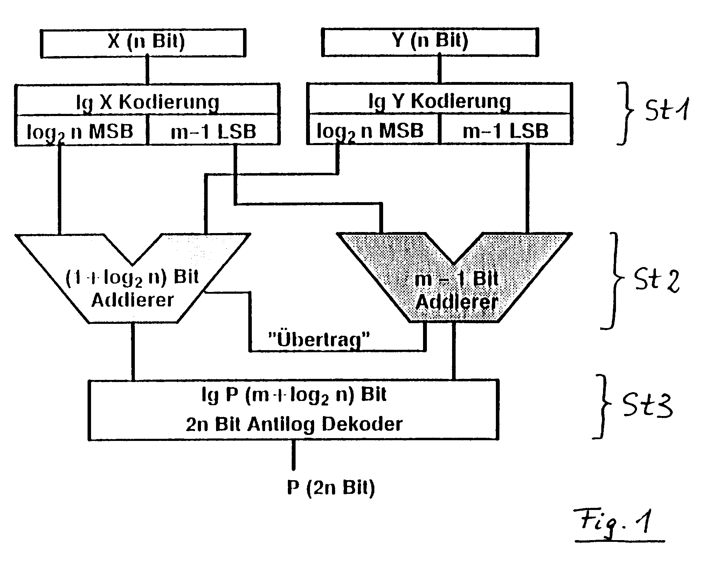

Fig. 1 zeigt ein Blockschaltbild eines Ausführungsbeispiels eines erfindungsgemäß aufgebauten Multiplizierers. Die vorstehend bereits erläuterte Arbeitsweise des erfindungsgemäßen Multiplizierers läßt sich vorteilhafterweise mit einem dreistufigen Aufbau mit den Stufen Stl, St2 und St3 realisieren.

An der ersten Stufe Stl liegen die (binären) Eingangsworte X und Y an, die bei dem gezeigten Ausführungsbeispiel jeweils n Bit aufweisen. Die erste Stufe Stl übernimmt die Segment-Codierung und Linearisierung.

Die Segment-Codierung bestimmt den höchstwertigsten Exponenten einer binären Zahl X. Die Linearisierung wird durch eine n-Bitschaltmatrix durchgeführt, die durch Steuersignale der Segment-Encodierung bestimmt wird. Diese Schaltmatrix ist für jedes der beiden Eingangsworte vorhanden. Die Schaltmatrix wird im folgenden noch näher erläutert werden.

Die zweite Stufe St2 sorgt für die Carry-Select-Addition. Zur beschleunigten Summation ist der Addierer nach dem Carry-Select-Verfahren aufgebaut und zeichnet sich durch einen regelmäßigen, skalierbaren Aufbau der Gesamtschaltung aus. Er addiert die linearen Anteile $x_B$ bzw. $y_B$ der semi-logarithmisch codierten Faktoren. Ergibt sich ein Übertrag bei der Addition, so wird über den Carry-Ausgang das Ergebnis aus der Matrix um ein weiteres Bit nach links verschoben.

Die dritte Stufe St3 übernimmt schließlich die Segment-Codierung und Exponentialfunktion. Diese Schaltmatrix hat das Format $(m + n)^n$. Hierin wird die Summe aus dem Addierer um das Segment der Summe der Exponenten nach links geschoben. Diese Matrix ist im Layout doppelt so groß wie eine der anderen Matrizen. Die reine Matrix besteht aus 256 n-Kanal-Transistoren. Sie setzt sich zusammen aus 64*8 Transistoren zum Schieben der Summe und weiterer 128 Transistoren zur Erzeugung eines definierten Nullpegels an unbestimmten Ausgängen.

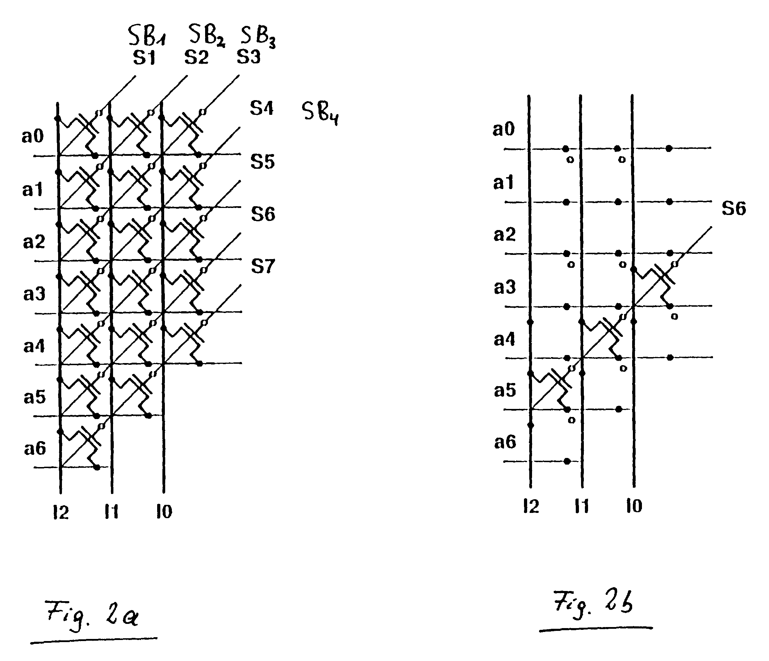

In Fig. 2a ist eine flächeneffiziente Parallel-Schaltmatrix dargestellt, nach der eine logarithmische n-Codierung vornehmbar ist. Sie weist ausschließlich NMOS-Transistoren auf. Die Schaltungskonfiguration der Matrix kann mit semi-logarithmischen Zahlen eine einfache Implementation von Potenz- und Radixfunktionen ermöglichen, wobei die Addition komplett entfallen kann. Sie weist die Eingangsanschlüsse a0, a1, a2, ..., a6 auf, verfügt über die Segmente S1 bis S7 und weist ferner die Ausgänge l0, l1 und l2 auf. In Fig. 2b ist ein Schaltungszustand der in Fig. 2a dargestellten Matrix dargestellt, in dem das Segment S6 aktiv ist.

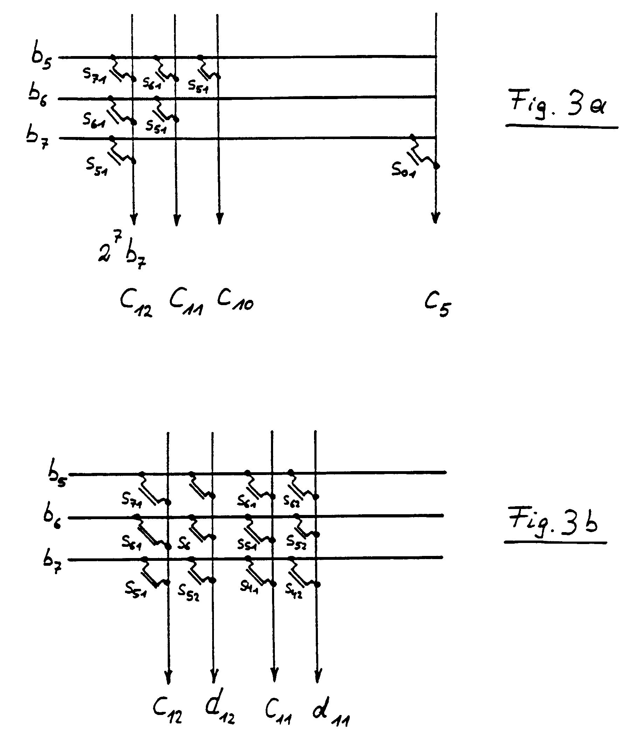

Die Fig. 3a und 3b zeigen mögliche Ausführungsformen von Schaltmatrizen, wie sie insbesondere für die Operation $2^{j\,1} B = C$ verwendbar sind. Fig. 3b zeigt insbesondere eine Schaltmatrix, bei der eine sogenannten Doppel-Schaltmatrix verwendet wird.

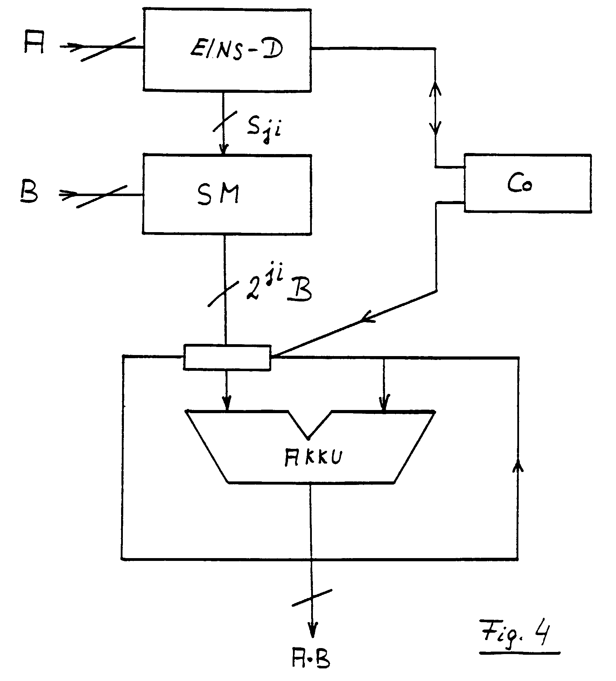

In Fig. 4 ist eine Schaltungsanordnung dargestellt, bei der die digital-logarithmische Multiplikation A*B nach folgender Verknüpfung erfolgt:

$$A*B = (2^{j1} + 2^{j2} + ...) * B$$

Die Erinnerungsgröße A liegt zunächst an einem sogenannten EINS-Detektor an (EINS-D), der seinerseits mit einem Controller (CO) sowie mit einer nachgeschalteten Schaltmatrix (SM), an der die Eingangsgröße B anliegt, verbunden ist. Ferner ist ein sogenannter Akkumulator (AKKU) nachgeschaltet, an dessen Ausgang die Verknüpfung A*B anliegt.

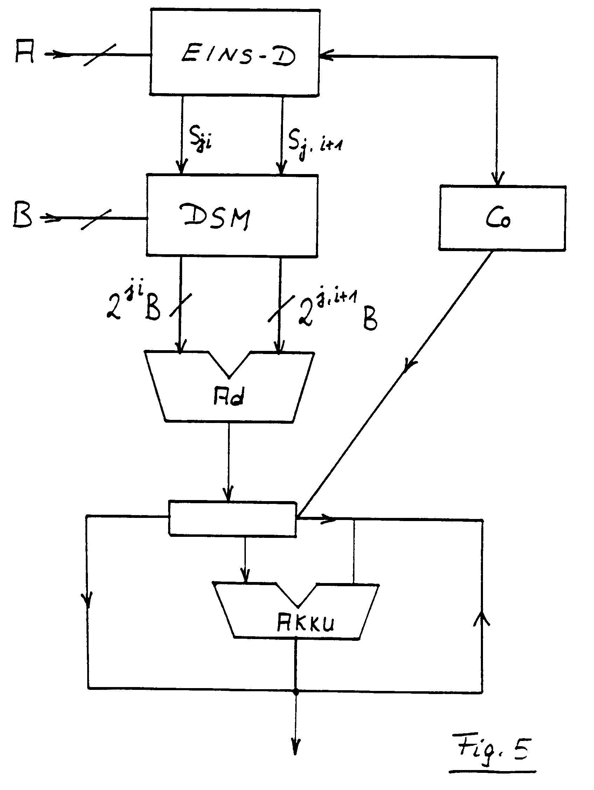

Nach dem gleichen Verknüpfungsverfahren wie in Fig. 4 arbeitet die in Fig. 5 dargestellte Schaltungsanordnung, jedoch wird eine sogenannte Doppel-Switch-Matrix (DSM) eingesetzt, deren Ausgänge zunächst an einem Addierer (Ad) anliegen. Ebenso wie im vorgenannten Fall geschildert, wird das Verknüpfungsprodukt A*B am Ausgangsanschluß eines nachgeschalteten Akkumulators (AKKU) erhalten.

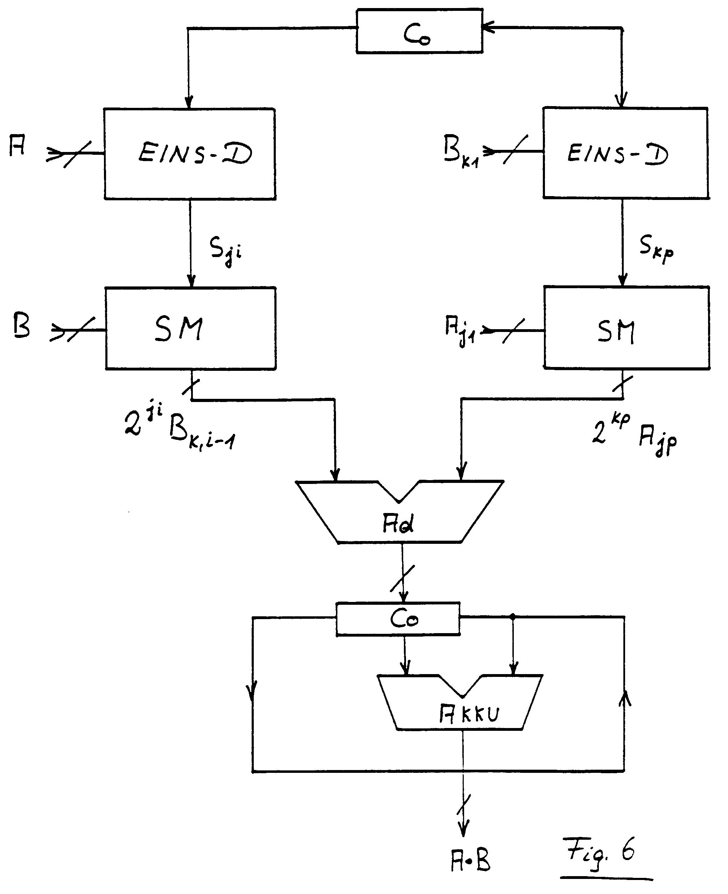

In Fig. 6 ist eine weitere Schaltungsanordnung dargestellt, bei der sich die Verknüpfungsregel wie folgt darstellt:

$$A * B = 2^{j1} *B + 2^{k1} *A_{j1} + A_{j1} *B_{k1}$$

Eine nachgeschaltete Iteration erfolgt dabei nach der folgenden Verknüpfungsregel:

$$A_{j1} * B_{k1} = 2^{j2} * B_{k1} + 2^{k2} *A_{j2} + A_{j2} *B_{k2}$$

Die dargestellte Schaltungsanordnung weist eine Parallelschaltung auf, bei der die Paralellzweige jeweils aus einem EINS-Detektor (EINS-D) sowie einer Schaltmatrix (SM) bestehen. Die Ausgänge der Parallelschaltung liegen an einem Addierer (Ad) an, der über einen Controller (CO) und einem nachgeschalteten Akkumulator (AKKU) zum Verknüpfungsergebnis A * B führt.

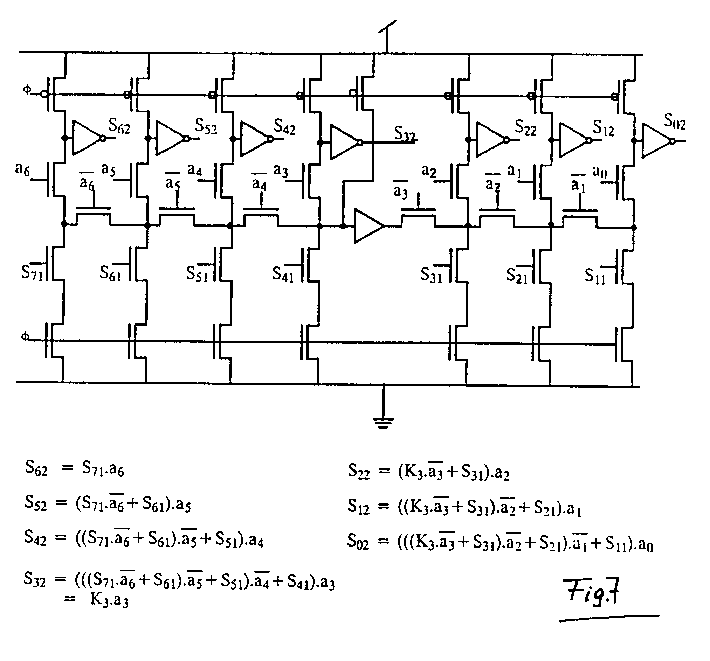

Schließlich ist in der Fig. 7 ein Detektorkreislauf für das Segment $S_{j2}$ dargestellt, in dem die zweite EINS auftritt. Ferner sind in Fig. 7 die für die Segmentverknüpfungen notwendigen Verknüpfungsvorschriften angegeben.

Die angegebenen Schaltungsanordnungen ermöglichen die Verarbeitung von Daten oder Signalen, die zum einen eine große Dynamik (großer Wertebereich) und zum anderen eine zeitlich rasche Veränderlichkeit besitzen.

Im Prinzip kann bei höchster Datenrate des Multiplikanden A je Sampelvorgang A(m) ein größenordnungsmäßig richtiger Faltungswert A(m) * B ermittelt werden. Wenn A(m) langsamer veränderlich ist, wird der Multiplizierer zur adaptiven Genauigkeitsverbesserung von A * B verwendet.

**Patentansprüche**

1. Schaltungsanordnung zum digitalen Multiplizieren zweier Integer-Zahlen X, Y, mit

- einer Codiereinheit,
- einer Addiereinheit, die die Ausgangswerte der Codiereinheit addiert, und
- einer Decodiereinheit, die den Ausgangswert der Addiereinheit decodiert,

dadurch **gekennzeichnet,** daß die Codiereinheit die Integer-Zahlen X, Y nach folgender Formel codiert:

$$X = 2^k * (1 + x_B)$$

$$Y = 2^1 * (1 + y_B)$$

daß die Addiereinheit die Größen k, 1, $x_B$ und $y_B$ zur nachfolgenden Multiplikation addiert,

$$X * Y = 2^k * (1 + x_B) * 2^1 * (1 + y_B)$$
$$= 2^{k+1} * (1 + x_B + y_B + x_B y_B),$$

daß der gemischte Term $x_B * y_B$ ein Maß für die Genauigkeit bei der Berechnung darstellt, so daß je nach Genauigkeit für die Multiplikation folgendes gilt:

$$x_B, y_B \approx 0 :$$

$$X * Y = 2^{k+1}(1 + x_B + y_B)$$

$$x_B, y_B \approx 1 :$$

$$X * Y = 2^{k+1+1}(1 + [x_B + y_B]/2)$$

wobei bei höherer geforderter Genauigkeit die Faktoren $x_B$ und $y_B$ nach obenstehender Codierung erneut codiert werden und das Produkt X*Y so rekursiv berechnet wird.

2. Schaltungsanordnung nach Anspruch 1,
dadurch **gekennzeichnet,** daß eine Schaltmatrix die logarithmische Codierung durchführt.

3. Schaltungsanordnung nach Anspruch 1 oder 2,
dadurch **gekennzeichnet,** daß ein Schieberegister für die Decodierung vorgesehen ist.

## Claims

1. A circuit arrangement for digital multiplication of two integers X, Y, having

   - an encoding unit,
   - an adding unit, which adds the output values of the encoding unit, and
   - a decoding unit, which decodes the output value of the adding unit,

   **characterized by** said encoding unit encoding the integers X,Y according to the following formula:

$$X = 2^k * (1 + x_B) = 2^k + x_B$$

$$Y = 2^1 * (1 + y_B) = 2^1 + y_B$$

   by said adding unit adding the values k,l and $x_B$ and $y_B$ for the following multiplication,

$$X * Y = 2^k * (1 + x_B) = 2^1 * (1 + y_B)$$

$$= 2^{k+1} * (1 + x_B + y_B + x_B y_B),$$

   by the mixed term $x_B*y_B$ representing a measure for the accuracy for the calculation so that depending on the accuracy for the multiplication the following applies:

$$x_B, y_B \approx 0 :$$

$$X * Y = 2^{k+1}(1 + x_B + y_B)$$

$$x_B, y_B \approx 1 :$$

$$X * Y = 2^{k+1+1}(1 + \{x_B + y_B\}/2)$$

   with if greater accuracy is required the factors xB and $y_B$ being encoded once more according to the above encoding and the product X * Y being recursively calculated.

2. A circuit arrangement according to claim 1,
   **characterized by** a switch matrix carrying out the logarithmic encoding.

3. A circuit arrangement according to claim 1 or 2,
   **characterized by** a shift register being provided for said decoding.

## Revendications

1. Montage pour la multiplication numérique de deux nombres entiers (X, Y), comportant

   - une unité de codage,
   - une unité d'addition, qui additionne les valeurs de sortie de l'unité de codage, et
   - une unité de décodage, qui décode la valeur de sortie de l'unité d'addition,

   caractérisé en ce que l'unité de codage code les nombres entiers X, Y conformément aux formules suivantes :

$$X = 2^k * (1 + x_B)$$

$$Y = 2^l * (1 + y_B)$$

que l'unité d'addition additionne les grandeurs k, l, $x_B$, $y_B$ pour effectuer la multiplication suivante

$$X * Y = 2^k * (1 + x_B) * 2^l * (1 + y_B)$$

$$= 2^{k+1} * (1 + x_B + y_B + x_B y_B),$$

que le terme mixte $x_B * y_B$ représente une mesure de la précision lors du calcul de sorte qu'en fonction de la précision pour la multiplication, on obtient ce qui suit :

$$x_B, y_B \approx 0 :$$

$$X * Y = 2^{k+1}(1 + x_B + y_B)$$

$$x_B, y_B \approx 1 :$$

$$X * Y = 2^{k+1+1} (1 + [x_B + y_B]/2)$$

auquel cas, dans le cas où une précision accrue est exigée, les facteurs $x_B$ et $y_B$ sont à nouveau codés selon le codage indiqué précédemment et le produit X*Y est calculé ainsi de façon récursive.

2.  Montage selon la revendication 1, caractérisé en ce qu'une matrice de commutation exécute le codage logarithmique.

3.  Montage selon la revendication 1 ou 2, caractérisé en ce qu'un registre à décalage est prévu pour le décodage.

Fig. 1

Fig. 2b

Fig. 2a

Fig. 3a

Fig. 3b

Fig. 4

Fig. 5

Fig. 6

$$S_{62} = S_{71}.a_6$$

$$S_{52} = (S_{71}.\overline{a_6} + S_{61}).a_5$$

$$S_{42} = ((S_{71}.\overline{a_6} + S_{61}).\overline{a_5} + S_{51}).a_4$$

$$S_{32} = (((S_{71}.\overline{a_6} + S_{61}).\overline{a_5} + S_{51}).\overline{a_4} + S_{41}).a_3$$
$$\quad\;\; = K_3.a_3$$

$$S_{22} = (K_3.\overline{a_3} + S_{31}).a_2$$

$$S_{12} = ((K_3.\overline{a_3} + S_{31}).\overline{a_2} + S_{21}).a_1$$

$$S_{02} = (((K_3.\overline{a_3} + S_{31}).\overline{a_2} + S_{21}).\overline{a_1} + S_{11}).a_0$$

Fig.7

EP 0 628 183 B1